Europäisches Patentamt

European Patent Office

Office européen des brevets

(11) Numéro de publication: **0 243 243 B1**

# FASCICULE DE BREVET EUROPEEN

(45) Date de publication de fascicule du brevet:
**31.07.91**

(21) Numéro de dépôt: **87400857.6**

(22) Date de dépôt: **15.04.87**

(51) Int. Cl.5: **B01D 21/00**

(54) **Procédé et installation de séparation des constituants d'une suspension.**

(30) Priorité: **22.04.86 FR 8605780**

(43) Date de publication de la demande:
**28.10.87 Bulletin 87/44**

(45) Mention de la délivrance du brevet:
**31.07.91 Bulletin 91/31**

(84) Etats contractants désignés:
**BE DE ES FR GB IT NL SE**

(56) Documents cités:
**CH-A- 156 550**    **FR-A- 2 315 304**
**FR-A- 2 535 223**    **FR-E- 65 730**
**GB-A- 2 115 398**    **US-A- 3 835 045**

(73) Titulaire: **GUINARD OIL SERVICES**
**320, rue Hélène Boucher**
**F-78530 Buc(FR)**

(72) Inventeur: **Guinard, Paul**
**9, Avenue Pozzo di Borgo**
**F-92210 Saint-Cloud(FR)**

(74) Mandataire: **Bourgognon, Jean-Marie et al**
**Cabinet Flechner 22, Avenue de Friedland**
**F-75008 Paris(FR)**

Rank Xerox (UK) Business Services

## Description

La présente invention est relative aux procédés et aux installations de séparation de constituants d'une suspension.

L'invention s'applique tout particulièrement à la récupération des constituants de boues de pétrole, telles qu'il s'en produit notamment dans les fonds de réservoirs d'hydrocarbures, dans les pièces d'eau polluées par des hydrocarbures et dans d'autres opérations de traitement du pétrole notamment par raffinage.

Au FR-A-2315 304, on décrit l'utilisation d'un filtre à bandes pour déshydrater des boues provenant des eaux résiduaires urbaines ou industrielles.

Au FR-B-253 5223, on décrit un procédé de séparation des constituants d'une suspension contenant de l'eau, de l'huile et des matières solides, notamment de boues de pétrole, qui consiste à chauffer la suspension après l'avoir fait passer dans un filtre auto-nettoyant constitué d'une enveloppe ayant une entrée pour la suspension et une sortie pour les sédiments, d'une surface filtrante délimitant avec la paroi intérieure de l'enveloppe une chambre pour le filtrat munie d'une sortie pour celui-ci et des moyens à brosse de décolmatage de la surface filtrante, à séparer la suspension par centrifugation en une phase essentiellement aqueuse, en une phase essentiellement huileuse et en sédiments comprenant l'essentiel des matières solides, de l'eau et des traces d'huile.

Ce procédé donne satisfaction et a permis, pour la première fois, de traiter des boues de pétrole d'une manière satisfaisante.On peut ainsi traiter des déchets pétroliers en obtenant des sédiments contenant divers solides, y compris des hydrocarbures, de l'eau en quantité importante et des traces d'hydrocarbures liquides. Ces sédiments peuvent être éliminés, soit par mise à la décharge, soit par incinération. Cette mise à la décharge ou cette incinération s'effectueront d'une manière d'autant plus économique que le pourcentage d'eau dans les sédiments sera faible. On a donc essayé de filtrer ces sédiments, mais sans succès.

L'invention vise un procédé de séparation, qui pallie les inconvénients mentionnés ci-dessus et qui permet notamment d'obtenir, à partir de sédiments contenant jusqu'à 90% d'eau un produit pelletable et assez sec pour que son coût d'élimination soit réduit.

L'invention a donc pour objet un procédé de séparation des constituants d'une suspension contenant de l'eau, de l'huile et des matières solides, notamment de boues de pétrole, tel que défini à la revendication 1. Le dernier filtre a avantageusement une ouverture de maille inférieure à 1mm et, de préférence, comprise entre 0,2 et 0,5mm.

Il s'est en effet avéré, d'une manière surprenante, qu'en introduisant un agent floculant dans les sédiments, de préférence à raison de 10 à 100 parties par million en matières sèches, et pourvu que la température des sédiments soit d'au moins 50°C, il devient possible de filtrer les sédiments sur un filtre convenable et d'en exprimer l'eau par pressage. Alors que les filtres à toile filtrante, utilisés dans les filtres presse ou les filtres bande qui peuvent être mis en oeuvre dans le procédé suivant l'invention, se bouchent si le produit à filtrer comporte un pourcentaged'hydrocarbures liquides trop important, il n'en est plus de même si la teneur en hydrocarbures est préalablement réduite de façon importante par le procédé décrit au brevet FR-B-2535223 et si l'on opère à une température suffisante. La mise en température des sédiments ne soulève aucun problème particulier, puisqu'ils sont déjà chauffés dans le stade de séparation par centrifugation et qu'il suffit de les envoyer à la filtration en aval avant qu'ils n'aient eu le temps de se refroidir.

Le premier stade du procédé de séparation suivant l'invention consiste à faire passer la suspension contenant de l'eau, de l'huile et des matières solides, dans un filtre auto-nettoyant apte non seulement à enlever une grande partie des matières solides, quelle que soit leur densité, mais à séparer aussi les matières solides moins denses que les constituants liquides de la suspension, de sorte que le filtrat du filtre peut être envoyé sans danger directement au séparateur centrifuge. On utilise à cet effet, un filtre auto-nettoyant dont l'enveloppe est généralement sensiblement de révolution à axe vertical avec une sortie pour les sédiments prévue au bas de l'enveloppe, les matières solides très denses se trouvant dans la suspension amenée au sommet de l'enveloppe s'abaissant peu à peu dans celle-ci, jusu'à venir constituer un bouchon solide devant la sortie pour les sédiments. Les matières solides moins denses que les constituants liquides de la suspension ont tendance à venir colmater la surface filtrante, mais sont décolmatées par les moyens de décolmatage, qui comprennent notamment des brosses entraînées en rotation par rapport à l'axe de la surface filtrante, laquelle est coaxiale à l'enveloppe. Ces produits solides moins denses que les constituants liquides de la suspenssion viennent ainsi eux aussi dans le bouchon qui, de temps à autre, est évacué par la sortie pour les sédiments. Seules les matières solides très fines, notamment de dimensions inférieures à 400 micromètres passent à travers le filtre. Ces fines sont toutes

2

plus denses que les constituants liquides. On trouvera d'autres détails de cette technique au brevet français précité

Le deuxième stade du procédé suivant l'invention consiste à chauffer la suspension à une température supérieure à 60°C et, de préférence, comprise entre 60°C et 110°C. On effectue ce stade dans un réchauffeur intermédiaire disposé entre le filtre auto-nettoyant et le séparateur centrifuge.

Le troisième stade du procédé suivant l'invention consiste à séparer les constituants de la suspension par centrifugation à une température supérieure à 60°C, et notamment comprise entre 60°C et 110°C, en une phase essentiellement aqueuse, en une phase essentiellement huileuse et en sédiments comprenant l'essentiel des matières solides, de l'eau et des traces d'huile. Par l'expression phase essentiellement aqueuse, on entend une phase comprenant au moins 98% en volume d'eau et, de préférence, au moins 99% en volume d'eau contenant moins de 1% en volume d'huile, et notamment moins de 0,5% en volume d'huile et contenant également moins de 1% en poids de matières solides, et notamment moins de 0,5% en poids de matières solides. Par l'expression l'essentiel des matières solides, on entend dans le présent mémoire que les matières solides, plus denses que les constituants liquides de la suspension et contenues dans la suspension d'origine, se retrouvent pour au moins 90% en poids et, de préférence pour au moins 95% en poids dans les sédiments. D'une manière générale, les sédiments contiennent de 3% à 60% en poids de matières solides et de 92% à 30% en volume d'eau. Par trace d'huile, on entend une quantité en volume d'huile qui est inférieure à 2% et, de préférence, inférieure à 0,5%. La séparation par centrifugation s'effectue dans un séparateur qui comprend essentiellement un bol tournant et un convoyeur interne tournant à une vitesse différentielle par rapport au bol.

Le quatrième stade du procédé suivant l'invention consiste à ajouter aux sédiments issus de la séparation par centrifugation un agent floculant.

On utilise en général comme agents floculants des polyélectrolytes anioniques ou cationiques, notamment des polyacrilamides. C'est ainsi que l'on peut faire appel aux produits Magnofloc(marque de fabrique) qui sont des polymères synthétiques de haut poids moléculaires solubles dans l'eau de type cationique anionique ou non ionique. Leurs molécules sont à la chaîne longue et ont une grande affinité pour les surfaces solides.

La molécule, en s'absorbant en partie sur une particule et sur d'autres, provoque la floculation par formation d'un pont qui relie les particules On peut également utiliser un polyélectrolyte cationique connu sous le nom de Zetag (marque de fabrique) et notamment le Zetag 87 et les Zetag 57 et 63. Tous ces produits sont disponibles auprès de la Société Allied Colloids. On utilise habituellement 10 à 100 parties en poids d'agents floculants exprimés en matières sèches par million de partie en poids de sédiments. Il est habituel d'ajouter l'agent floculant sous la forme d'une solution aqueuse à 2 à 5% en poids que l'on prépare au moins une demi-heure avant de l'utiliser.

Le stade suivant du procédé consiste à faire passer le mélange d'agents floculants et de sédiments, alors que la température est d'au moins 50°C, sur un filtre ayant une ouverture de maille inférieure à 1mm et notamment comprise entre 0,5 et 1mm et à exprimer l'eau des sédiments par pressage.

Si l'on flocule les sédiments entre 80 et 90°C la floculation s'effectue très bien. Malheureusement, les pièces du filtre bande ou du filtre presse en aval subissent des déformations à ces températures. Si l'on attend le refroidissement complet des sédiments, la floculation est difficile, elle ne reste pas égale à elle-même dans le temps, elle exige davantage de floculant. Il s'ensuit que la température la plus favorable compte tenu des difficultés ci-dessus, est comprise entre 50 et 70°C. On obtient très facilement cette température au filtre bande derrière la centrifugation en effectuant la filtration dans un délai de 1 à 5 heures, après la séparation par centrifugation. Avantageusement, on peut effectuer ces deux opérations en continu avec cependant la possibilité d'un stockage intermédiaire, facilitant d'ailleurs l'opération d'addition d'un agent floculant. Si l'on a ajouté des floculants pour faciliter l'opération de séparation par centrifugation, ces floculants se retrouvent dans les sédiments et peuvent contribuer à faciliter l'opération ultérieure de filtration ou à diminuer la quantité d'agent floculant à ajouter.

L'élévation de la température qui a été nécessaire pour l'opération de séparation par centrifugation est donc mise à profit pour la filtration par pressage. Inversement, la dessication des sédiments en aval du séparateur centrifuge fait que désormais on ne craint plus de maintenir un excès d'eau dans l'installation en amont, et notamment dans le séparateur centrifuge, puisqu'on peut ensuite s'en débarrasser facilement.

Suivant une variante avantageuse, le procédé suivant l'invention consiste à retourner la phase essentiellement aqueuse et/ou l'eau exprimée des sédiments, en amont du filtre auto-nettoyant et/ou au stade de chauffage de la suspension et/ou entre le stade de filtration dans le filtre auto-nettoyant et le stade de chauffage, et/ou entre le stade de chauffage et le stade de séparation par centrifugation. On obtient un excellent résultat en retournant de l'eau juste en amont du filtre auto-nettoyant. Ceci permet de bien fluidiser la suspension au moment de son passage dans le filtre. Mais il est également bon de prévoir des canalisations avec des jeux de vannes permettant d'injecter l'eau en d'autres endroits de l'installation, et notamment dans le bac de préchauffage, lorsque l'eau recyclée se mélange malaisément au produit à traiter. On bénéficie alors du malaxage réalisé dans ce bac de préchauffage. On peut également envoyer l'eau juste en aval du filtre auto-nettoyant, ce qui permet, par un jeu de vannes, de rincer à contre-courant ce filtre, sans avoir à le démonter. De plus, le recyclage de l'eau permet de recycler aussi les calories correspondantes, ce qui diminue les pertes calorifiques et ce qui permet d'améliorer la stabilité de traitement de la suspension. Enfin, ce recyclage a un avantage supplémentaire :

au moment du démarrage et de l'arrêt de l'installation, on peut commencer et terminer le traitement en faisant passer de l'eau pure dans le séparateur et en introduisant la suspension à séparer dans le séparateur d'une façon croissante ou décroissante progressivement, de zéro à un maximum ou d'un maximum à zéro, sans que jamais la suspension ait la possibilité de boucher ou de bloquer le bol de centrifugation, parce que son débit n'est pas suffisant ou parce qu'elle rencontre des zones froides ayant tendance à la faire figer. On comprend donc que le recyclage de l'eau en divers points de l'installation peut varier dans de grandes mesures et c'est ainsi que l'on peut retourner de 10 à 80 % de l'eau exprimée des sédiments à l'installation. La quantité d'eau qui arrive dans le séparateur peut représenter de 90 à 10 % en volume de l'ensemble de l'eau et de la suspension.

L'invention vise également une installation telle que définie aux revendications 10 à 12.

Au dessin annexé donné uniquement à titre d'exemple :

la figure 1 est un schéma d'une installation suivant l'invention,

la figure 2 est un schéma du filtre auto-nettoyant de l'invention,

la figure 3 est un schéma du séparateur centrifuge de l'installation suivant l'invention, et

la figure 4 est un schéma du filtre bande de l'installation suivant l'invention.

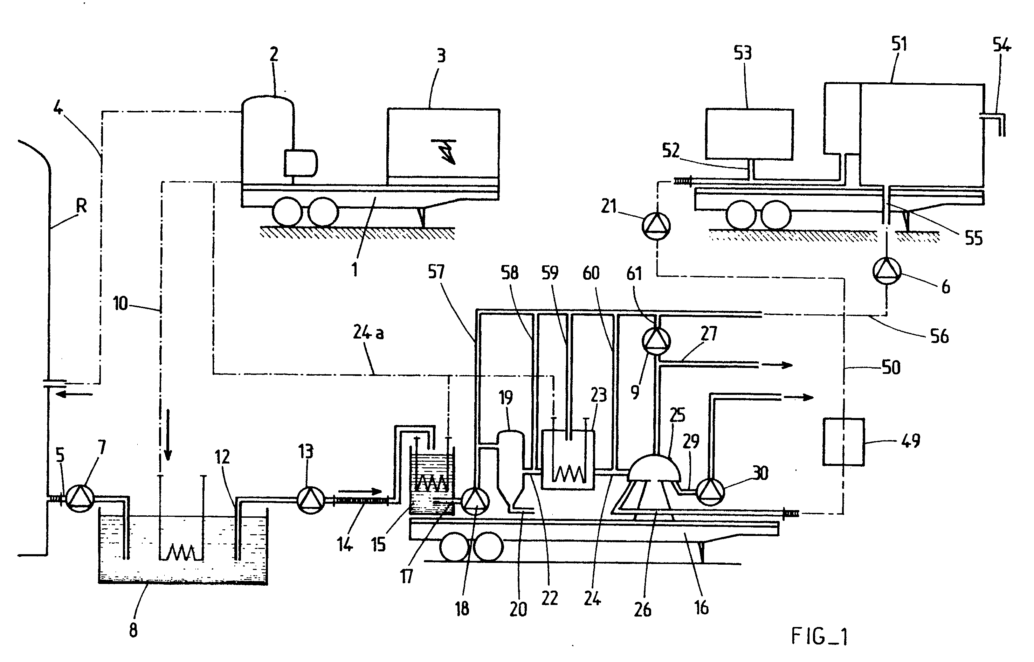

L'installation représentée à la figure 1 est branchée sur un réservoir ou lagon ou cuve R de stockage de produits pétroliers. L'installation comprend un premier véhicule 1 portant un générateur d'eau chaude et de vapeur ou chaudière 2 à groupe électrogène 3. En variante on peut recevoir vapeur et électricité à partir d'installations fixes. Ce générateur 2 peut être relié par un conduit 4 à une entrée du réservoir R débouchant au bas de celui-ci dans les boues. Du bas du réservoir R part un conduit 5, avec pompe 7, qui débouche dans une cuve 8. La cuve peut être chauffée par un circuit 10 de vapeur provenant du générateur 2. De la cuve 8 part un conduit 12 avec pompe 13 qui, par un conduit souple 14, débouche dans un bac de réchauffage 15 chauffé par de la vapeur provenant de la chaudière 2 et porté par un véhicule 16. Ce véhicule porte, en outre, le reste de l'installation . Du bas du bac de réchauffage 15 part un conduit 17 avec pompe 18, qui communique avec l'entrée pour la suspension d'un filtre auto-nettoyant 19. Les sédiments du filtre auto-nettoyant 19 sont évacués par un conduit 20. La sortie pour le filtrat du filtre auto-nettoyant 19 communique avec un conduit 22 qui alimente un réchauffeur intermédiaire 23 réchauffé par un circuit 24a de vapeur provenant du générateur 2. Le réchauffeur 23 communique par un conduit 24 avec un séparateur centrifuge 25 ayant une sortie pour les sédiments qui communique avec un conduit 26, une sortie pour le constituant liquide le plus dense qui communique avec un conduit 27 et une sortie pour le constituant liquide moins dense qui communique avec un conduit 29 muni d'une pompe 30. Le conduit 26 débouche dans un réservoir intermédiaire 49 dont le conduit de sortie 50 communique à travers une pompe 21 avec l'entrée d'un filtre à bande 51 porté par un véhicule. Dans le conduit 50 débouche un conduit 52 issu d'un réservoir 53 pour une solution de produit floculant. En général, la vitesse des bandes est comprise entre 2 et 8 m/min.

Le produit solide issu du filtre bande 51 est évacué par une goulotte 54, tandis que l'eau séparée par ce filtre bande 51 peut être évacuée par un conduit 55 ou peut être recyclée à travers une pompe 6 par un conduit 56 en amont du filtre auto-nettoyant 19 par l'intermédiaire d'un conduit 57, en aval de ce filtre auto-nettoyant 19, c'est-à-dire entre ce filtre auto-nettoyant 19 et le réchauffeur 23, par l'intermédiaire d'un conduit 58, dans le réchauffeur 23 par l'intermédiaire d'un conduit 59 ou entre le réchauffeur 23 et le séparateur centrifuge 25 par un conduit 60, étant entendu qu'il est prévu un système de vannes non représenté permettant d'envoyer cette eau recyclée, au choix, dans l'un des conduits 57, 58, 59, 60, ou dans plusieurs d'entre eux.

De la même façon on peut prélever par un conduit 61 à travers une pompe 9 tout ou partie de la phase aqueuse se trouvant dans le conduit 27 et amener cette phase aqueuse dans le conduit 56 à partir duquel elle peut être recyclée par les conduits 57, 58, 59 et 60.

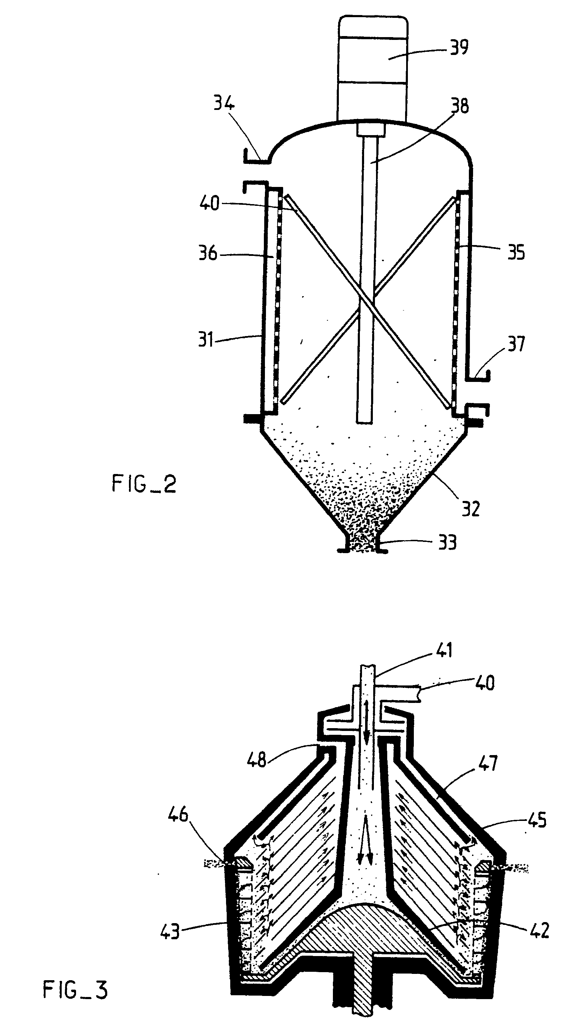

La figure 2 est un schéma plus détaillé du filtre auto-nettoyant 19. Ce filtre comprend essentiellement une enveloppe 31 sensiblement de révolution autour d'un axe vertical et dont le bas affecte la forme d'un entonnoir 32 à sortie 33 pour les sédiments. L'enveloppe est munie en haut d'une entrée 34 pour la suspension à filtrer. Une surface filtrante annulaire 35 est fixée le long de la paroi cylindrique intérieure de l'enveloppe 31 en délimitant avec celle-ci une chambre 36 annulaire fermée pour le filtrat. La chambre 36

4

est munie d'une sortie 37 traversant l'enveloppe 31. L'arbre 38 d'un motoréducteur 39 s'étend suivant l'axe vertical du filtre et porte une série de brosses 40 inclinées par rapport à l'horizontale. Ces brosses sont entraînées en rotation et viennent frotter la surface filtrante 35 et la décolmater.

Le fonctionnement de ce filtre auto-nettoyant est le suivant :

La suspension entre par l'entrée 34. Les constituants solides les plus denses tombent d'eux-mêmes peu à peu par gravité au fond et se rassemblent dans l'entonnoir 32 devant la sortie 33, puisqu'ils ne peuvent pas traverser la surface filtrante 35. Les constituants solides les moins denses sont entraînés vers la surface filtrante 35 et auraient tendance à y rester et à la colmater s'ils n'étaient pas repoussés vers le bas par les brosses 40, en sorte qu'ils s'agglomèrent eux aussi au bouchon de matières solides qui se forme peu à peu devant la sortie 33. Les constituants liquides additionnés de constituants solides très fins, par exemple d'une granulométrie inférieure à 400 microns, traversent la surface filtrante 35 pour arriver dans la chambre 36 pour le filtrat et ressortent par la sortie 37. De temps à autre, on ouvre la sortie 33 pour faire sortir l'agglomérat de matières solides qui s'accumulent dans l'entonnoir 32. Ce filtre est ainsi susceptible de fonctionner en continu, puisqu'il est auto-nettoyant et présente la particularité remarquable d'éliminer aussi, malgré son fonctionnement en continu, les constituants solides de la suspension moins denses que les constituants liquides de celle-ci.

La figure 3 est un schéma du séparateur centrifuge 25. Ce séparateur qui fonctionne en continu comprend une entrée 41 centrale pour la suspension dans un bol 42 tournant à une vitesse différente d'un convoyeur interne 43 disposé à la périphérie du bol au voisinage de l'enveloppe 45 de l'ensemble du séparateur centrifuge. Sous l'effet de la force centrifuge, les fines solides plus denses sont immédiatement plaquées sur la paroi interne du bol, raclées vers la haut par le convoyeur 43 et sortent par des orifices 46 d'éjection, tandis que les deux constituants liquides à séparer se séparent dans la pile de plateaux inclinés à l'intérieur du bol en fonction de leur densité, une sortie 47 étant prévue pour la phase liquide plus dense qui est rejetée à la périphérie et qui repousse vers l'intérieur le constituant liquide moins dense pour lequel est prévue une sortie 48.

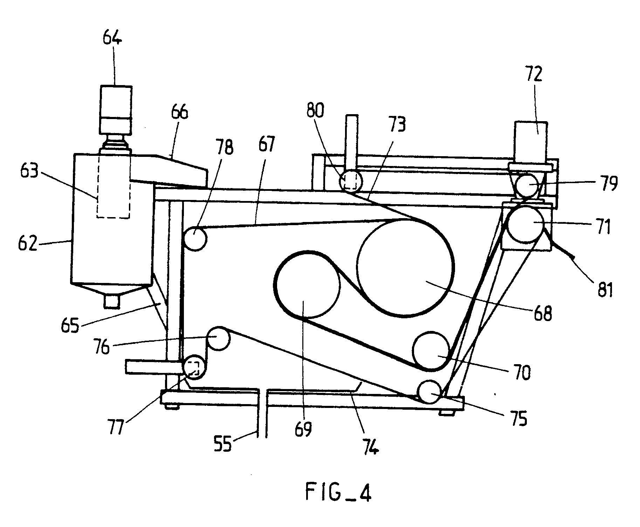

La figure 4 est un schéma plus détaillé du filtre bande 51.

Le conduit 50 (indiqué à la figure 1) débouche au bas d'un réservoir 62 dans lequel tourne un cadre 63 mû par un moteur 64. Le cadre sert d'agitateur. Ce réservoir 62 est porté par le bâti 65 du filtre bande. Au sommet du réservoir est prévu un distributeur 66 qui est susceptible de répandre et d'étaler les sédiments sur une première bande filtrante 67 sans fin, passant sur des rouleaux à axes horizontaux successifs, portant les références 68, 69, 70 et 71, ce dernier rouleau étant entraîné en rotation par un moteur 72. Une seconde bande filtrante 73, identique à la première, en tissu de nylon ayant une ouverture de maille de 4/10ème de mm environ, s'enroule, en passant au-dessus de la bande 67, sur le rouleau 68, le rouleau 69, le rouleau 70 et le rouleau 71. Les sédiments sont donc pressés entre les deux bandes 67 et 73 sous une pression relative comprise entre 0,1 et 0,3 bar. L'eau exprimée tombe dans un bac 74 fixé au bas de la machine et s'écoule à l'extérieur par le conduit 55 issu du bac 74. A la sortie du rouleau moteur 71, les deux bandes se séparent. LA bande 67 revient par des rouleaux à axes horizontaux 75, 76, 77 et 78, tandis que la bande supérieure 73 revient par des rouleaux 79 et 80. Une racle 81 décolle le produit déshydraté de la bande inférieure 67. Le gâteau déshydraté sort par la goulotte 54 indiquée à la figure 1.

L'installation fonctionne de la manière suivante.

On envoie de l'eau chaude par le conduit 4 au bas des réservoirs de stockage de produits pétroliers. Cette eau chaude met les boues en suspension de manière à rendre l'ensemble suffisamment peu visqueux pour être pompé par la pompe 7 dans la cuve 8.

Dans la cuve, la suspension de boues et d'eau chaude est réchauffée par de la vapeur provenant du générateur 2 et amenée par le conduit 10, de manière à favoriser la séparation ultérieure. La suspension, qui contient de l'eau, des produits hydrocarburés et des sédiments solides tant moins denses que plus denses que les constituants liquides, est envoyée par la pompe 13 et par le conduit 14 au bac tampon 15. De celui-ci, la suspension est envoyée par la pompe 18 et le conduit 17 dans le filtre auto-nettoyant 19. Les produits solides grossiers et, notamment, ceux moins denses que les constituants liquides de la suspension sont rejetés à l'extérieur par le conduit 20, tandis que les constituants liquides et les produits solides très fins passent dans le réchauffeur intermédiaire 23 qui les réchauffe afin de favoriser l'action du séparateur centrifuge 25 auquel la suspension est amenée par le conduit 24 qui est relié à l'alimentation 41 du séparateur. Les constituants solides sont séparés dans le séparateur et sortent par les orifices 46 qui communiquent avec le conduit 26. L'eau de plus grande masse volumique que les produits pétroliers sort par la sortie 40 qui communique avec le conduit 27 et peut être, le cas échéant, retournée au générateur 2 d'eau chaude et de vapeur. La sortie 48 est reliée au conduit 29 par lequel on récupère des produits pétroliers de valeur.

La phase aqueuse issue du conduit 27 peut être détournée en tout ou partie par la pompe 9 et le

EP 0 243 243 B1

conduit 61 et être envoyée dans les conduits 57, 58, 59 et 60, à titre d'eau recyclée. Il en va de même pour l'eau sortant du filtre bande 51, par le conduit 56.

Les exemples suivants illustrent l'invention.

EXEMPLE 1

Dans une installation telle que représentée aux figures, on traite 800m³ environ de boues de flottation rassemblées dans un bac de stockage. Au départ, le produit a la composition moyenne suivante :

| Hydrocarbures | 16,5% en volume |
|---|---|
| Eau | 78 % en volume |
| Sédiments | 5,5% en volume, |

soit trois fois moins en poids environ de sédiments.

La vitesse de rotation du séparateur DC6 (marque de fabrique) est de 4200 tours/minute, ce qui donne une accélération centrifuge de 5000 g environ dans la zone des sédiments.

20% de la phase aqueuse issue du conduit 27 sont recyclés en amont du filtre auto-nettoyant 19. Cette phase aqueuse comprend 0,05% en volume d'hydrocarbures, 99, 90% en volume d'eau et 0,05% en volume de sédiments. Par le conduit 29, on obtient une phase huileuse contenant 99,89% en volume d'hydrocarbures, 0% d'eau et 0,11% en volume de sédiments. Les sédiments obtenus à la sortie du séparateur centrifuge 25 par le conduit 26 contiennent 4,9% en volume d'hydrocarbures, 92% en volume d'eau et 3,1% en poids de sédiments. Il s'agit d'un produit non pelletable et qui ne brûle pas de soi-même. Ces sédiments sont envoyés dans le filtre bande 51, après addition de 50 parties par million de Magnafloe (marque de fabrique) qui est un agent floculant. La durée de stockage intermédiaire dans le réservoir 49 est inférieure à une heure. La température à laquelle s'effectue la séparation dans le séparateur centrifuge 25 est de 70°C environ et la température à laquelle s'effectue la filtration sur le filtre bande 51 est de 60°C environ. La vitesse linéaires des bandes dans le filtre bande est de 6 mètres/minute.

Dans la goulotte de sortie 54 du filtre bande 51, on recueille une phase sédiments ayant une teneur en hydrocarbures de 12% en volume, une teneur en eau de 71% en volume et une teneur en produits solides de 17% en poids. Il s'agit d'un produit pelletable.

On effectue un test de lixiviation (100 g de déchets bruts sont mis en contact pendant 15 heures avec un litre d'eau déminéralisée saturée en $CO_2$, puis un air à une température de 20°C. Le surnageant trouble est centrifugé et l'analyse des hydrocarbures totaux est effectuée sur le centrifugeat) sur le produit solide sortant par la goulotte 54. On trouve qu'il y a 300 mg d'hydrocarbures par litre. Le pouvoir calorifique inférieur de ce même produit est de 7704 j/g.

EXEMPLE 2

On traite des boues de flottation préalablement déshydratées partiellement par épaississement de la même façon qu'à l'exemple 1, si ce n'est que la vitesse linéaire des bandes du filtre bande est de 10 mètres/minute, pour tenir compte de la proportion importante de sédiments existant dans le produit.

Les boues de flottation contiennent au départ 10% en volume d'hydrocarbures, 48% en volume d'eau et 42% en volume de sédiments (environ tois fois moins en poids).

La température à l'entrée du séparateur centrifuge 25 est de 90°C eviron. On obtient par le conduit 27, une phase aqueuse d'une composition telle qu'elle peut être rejetée directement dans le caniveau d'une raffinerie. Par le conduit 29, on obtient une phase huileuse qui peut être recyclée dans une raffinerie.

Par le conduit 27,on obtient des sédiments qui ont une teneur en hydrocarbures de 3% en volume, une teneur en eau de 75% en volume et une teneur en matières solides de 22% en poids. Il s'agit d'un produit qui n'est pas pelletable.

On envoie ce produit au filtre bande 51, après addition de 60 parties par million de Zétags (marque de fabrique) à titre d'agent floculant. La température de passage au filtre bande 51 est de 70°C environ. Le passage au filtre bande provoque une réduction de volume (par élimination d'eau) dans la proportion de 3 à 1 jusqu'à 5 à l, ce qui permet une économie très considérable sur le coût de l'incinération de cette phase.

EXEMPLE 3

6

On reprend l'exemple 1 avec des boues de compositions variables : la teneur en hydrocarbures varie de 3 à 6 % en volume, la teneur en eau de 88 à 94 % en volume et la teneur en sédiments de 5 à 6 % en volume.

Sur une période de plusieurs semaines, on observe que l'installation munie du filtre bande 51 réduit le volume de la phase sédiments dans la proportion d'environ 5 à 1, de sorte que le volume de sédiments à incinérer devient environ le dixième du volume initial du produit à traiter.

Au cours de la campagne, il arrive que, de temps en temps, le produit à traiter est anormalement riche en huile ou en sédiments. On corrige alors sa composition en recyclant une partie de l'eau séparée à la sortie du filtre bande 51. On obtient ainsi un débit pratique moyen de 60 m³/jour du produit pendant plusieurs semaines, au lieu de moins de 30 m³ lorsque l'on ne prévoit pas de recyclage d'eau.

Au début et en fin de journée, lors du démarrage et de l'arrêt du traitement, on envoie progressivement une quantité croissante ou décroissante d'eau par le conduit 60, alors qu'au cours de la campagne, on préfère recycler de l'eau par le conduit 57 et, de temps à autre, décolmater le filtre 19 en envoyant de l'eau par le conduit 58.

Bien entendu, l'invention n'est pas limitée aux modes de réalisation décrits. En particulier, les pressions relatives indiquées dans le filtre-bande suffisent certes à obtenir le résultat souhaité, mais peuvent être augmentées, avec avantage, par exemple jusqu'à 3 bar et notamment jusqu'à 1 bar.

**Revendications**

1. Procédé de séparation des constituants d'une suspension contenant de l'eau, de l'huile et des matières solides, notamment de boues de pétrole, qui consiste à séparer les matières solides moins denses que les constituants liquides de la suspension, à chauffer la suspension débarassée des matières solides moins denses à une température supérieure à 60°C puis à la séparer par centrifugation à cette température en une phase essentiellement aqueuse, en une phase essentiellement huileuse et en sédiments comprenant l'essentiel des matières solides, de l'eau et des traces d'huile, caractérisé en ce qu'il consiste à ajouter aux sédiments un agents floculant et, alors que leur température est d'au moins 50°C, à en exprimer l'eau par pressage sur un filtre ayant une ouverture de maille inférieure à 1mm.

2. Procédé suivant la revendication 1, caractérisé en ce que l'ouverture du filtre est comprise entre 0,2 et 0,5mm environ.

3. Procédé suivant la revendication 1, caractérisé en ce qu'il consiste à chauffer la suspension débarassée des matières solides moins denses à une température comprise entre 60°C et 110°C, à effectuer la séparation à cette température, puis à envoyer les sédiments du stade de centrifugation au stade de filtration avant qu'ils aient eu le temps de se refroidir.

4. Procédé suivant la revendication 1, caractérisé en ce qu'il consiste à ajouter aux sédiments de 10 à 100 parties par million en matières sèches d'agent floculant.

5. Procédé suivant l'une des revendications précédentes, caractérisé en ce que l'agent floculant est un polyélectrolyte organique cationique ou anionique.

6. Procédé suivant l'une des revendications précédentes, caractérisé en ce qu'il consiste à séparer les matières solides moins denses que les constituants liquides de la suspension dans un filtre auto-nettoyant.

7. Procédé suivant l'une des revendications précédentes, caractérisé en ce qu'il consiste à filtrer la suspension, avant de l'envoyer au stade de chauffage, dans un filtre auto-nettoyant constitué d'une enveloppe ayant une entrée pour la suspension et une sortie pour les sédiments, d'une surface filtrante délimitant avec la paroi intérieure de l'enveloppe une chambre pour le filtrat munie d'une sortie pour celui-ci, et de moyens de décolmatage de la surface filtrante.

8. Procédé suivant l'une des revendications précédentes, caractérisé en ce qu'il consiste à retourner la phase essentiellement aqueuse et/ou l'eau exprimée des sédiments, en amont du filtre auto-nettoyant et/ou au stade de chauffage de la suspension et/ou entre le stade de filtration dans le filtre auto-nettoyant et le stade de chauffage, et/ou entre le stade de chauffage et le stade de séparation par centrifugation.

9. Procédé suivant l'une des revendications précédentes, caractérisé en ce qu'il consiste à exprimer l'eau des sédiments par pressage alors que leur température est comprise entre 50° et 70° C.

10. Installation de mise en oeuvre du procédé suivant l'une des revendications précédentes, qui comprend un séparateur centrifuge (25) et, en amont du séparateur centrifuge (25) un filtre auto-nettoyant (19) constitué d'une enveloppe (31) ayant une entrée (34) pour la suspension et une sortie (33) pour les sédiments d'une surface filtrante (35) délimitant avec la paroi intérieure de l'enveloppe (31) une chambre (36) pour le filtrat munie d'une sortie (37) pour celui-ci et de moyens de décolmatage (40) de la surface filtrante (35) un réchauffeur (23) étant intercalé entre le filtre auto-nettoyant (19) et le séparateur centrifuge (25), caractérisée par un conduit (50) mettant la sortie pour les sédiments du séparateur centrifuge (25) en communication avec un filtre (51) ayant une ouverture de maille comprise entre 0,2 et 0,5 mm et fonctionnant avec application d'une pression sur le produit à filtrer.

11. Installation suivant la revendication 9, caractérisée en ce que le filtre (51), en aval du séparateur centrifuge (25), est un filtre presse ou un filtre bande.

12. Installation suivant la revendication 9 ou 10, caractérisée par des conduits mettant en communication le conduit de sortie (47) de la phase essentiellement aqueuse du séparateur centrifuge (25) et/ou le conduit de sortie (56) de l'eau du filtre (51) disposé en aval du séparateur centrifuge (25), avec un emplacement en amont du filtre auto-nettoyant (19) et/ou avec le réchauffeur (15) et/ou avec un emplacement compris entre le réchauffeur (15) et le séparateur centrifuge (25)

**Claims**

1. A process for the separation of the constituents of a suspension containing water, oil and solid materials, particularly oil sludges, which comprises:

   separating the solid materials less dense than the liquid constituents of the suspension, heating the suspension free from the less dense solid materials at a temperature exceeding 60° C;

   then separating the suspension by centrifuging at said temperature into an essentially aqueous phase, into an essentially oily phase and into sediments mainly comprising the main portion of solid materials, water and traces of oil characterized in that it comprises adding a flocculant to the sediments; and while the temperature of the sediments is at least 50° C, squeezing the water therefrom by pressing on a filter having a mesh size smaller than 1 mm.

2. The process according to claim 1, characterized in that the filter mesh size is between approximately 0.2 and 0.5 mm.

3. The process according to claim 1, characterized in that it comprises treating the suspension free from the less dense solid material at a temperature of 60° C to 110° C, carrying out the separation at this temperature, then passing the sediments from the step of centrifuging to the step of filtering before said sediments have had time to cool.

4. The process according to claim 1, characterized in that it comprises adding to the sediments 10 to 100 parts per million of dry flocculant.

5. The process according to claim 1, characterized in that the flocculant is a cationic or anionic organic polyelectrolyte.

6. The process according to anyone of the preceding claims, characterized in that it comprises separating the solid materials less dense than the liquid constituents in a self-cleaning filter

7. The process according to anyone of the preceding claims, characterized in that it comprises filtering the suspension, prior to passing it to the step of heating, in a self-cleaning filter constituted by an envelope, having an inlet for the suspension and an outlet for the sediments, a filtering surface defining with the inner wall of the envelope a chamber for the filtrate provided with an outlet for the latter and means for unclogging the filtering surface.

8. The process according to anyone of the preceding claims, characterized in that it comprises returning the essentially aqueous phase and/or the water squeezed from the sediments at a point prior to filtering said suspension through the self-cleaning filter and/or at the step of heating the suspension and/or at a point between the step of filtering in the self-cleaning filter and the step of heating the suspension and/or at a point between the step of heating the suspension and the step of centrifugal separation.

9. The process according to anyone of the preceding claims, characterized in that it comprises squeezing water from the sediments by pressing them while the temperature thereof is 50 - 70° C.

10. Apparatus for carrying out the process of anyone of the preceding claims which comprises:
a centrifugal separator (25) and upwards the centrifugal separator a self-cleaning filter (19), constituted by an envelope (31) having an inlet (34) for the suspension and an outlet (33) for sediments, a filtering surface (35) defining with the inner wall of the envelope (31) a chamber (36) for the filtrate equipped with an outlet (37) for the same, and means (40) for unclogging the filtering surface (35), wherein a heater (23) is interposed between the self-cleaning filter (19) and the centrifugal separator (25), characterized by a pipe (50) connecting the outlet for sediments with a filter (51) having a mesh size between 0.2 and 0.5 mm and functioning with the application of pressure to the product to be filtered.

11. The apparatus according to claim 9, characterized in that the filter (51) connected downwards the centrifugal separator (25) is a filter press or a belt filter.

12. The apparatus according to claim 9 or 10, characterized in that it comprises pipes for connecting the outlet (47) for discharging the essentially aqueous phase from the centrifugal separator (25) and/or the pipe (56) for connecting the outlet for discharging water from the filter (51) connected downwards the centrifugal separator (25) to a point prior to the self-cleaning filter (19) and/or with the heater (15) and/or to a point between the heater (15) and the centrifugal separator (25).

**Patentansprüche**

1. Verfahren zur Abscheidung von Komponenten aus einer Suspension, die Wasser, Öl und Feststoffe enthält, insbesondere aus Erdölschlämmen, bei dem die Feststoffe abgetrennt werden, welche kleinere Dichte haben als die flüssigen Bestandteile der Suspension, die von den kleinere Dichte aufweisenden Feststoffen befreite Suspension auf eine Temperatur aufgeheizt wird, die über 60° C liegt, dann durch Zentrifugieren bei dieser Temperatur die Suspension zerlegt wird in eine im wesentlichen wässrige Phase, eine im wesentlichen ölige Phase und in Sedimente, welche den überwiegenden Teil der Feststoffe, Wasser und Spuren von Öl enthalten, dadurch gekennzeichnet, daß den Sedimenten ein Ausflockungsmittel zugesetzt wird und aus den Sedimenten, während die Temperatur mindestens 50° C beträgt, das Wasser durch Auspressen auf einem Filter herausgedrückt wird, welches eine Maschenweite von weniger als 1 mm aufweist.

2. Verfahren nach Anspruch 1, dadurch gekennzeichnet, daß die Maschenweite des Filters zwischen etwa 0,2 und 0,5 mm liegt.

3. Verfahren nach Anspruch 1, dadurch gekennzeichnet, daß die von den weniger dichten Feststoffen befreite Suspension auf eine Temperatur aufgeheizt wird, die zwischen 60° C und 110° C liegt, daß die Zerlegung der Suspension bei dieser Temperatur durchgeführt wird und daß die Sedimente aus dem Zentrifugierschritt in den Filtrierschritt überführt werden, bevor sie Zeit zur Abkühlung gehabt haben.

4. Verfahren nach Anspruch 1, dadurch gekennzeichnet, daß das Ausflockungsmittel den Sedimenten in einer Menge von 10 bis 100 ppm bezogen auf die Trockenmassen zugeführt wird.

5. Verfahren nach einem der vorstehenden Ansprüche, dadurch gekennzeichnet, daß das Ausflockungsmittel ein kationischer oder anionischer organischer Polyelektrolyt ist.

6. Verfahren nach einem der vorstehenden Ansprüche, dadurch gekennzeichnet, daß das Abscheiden derjenigen Feststoffe, die geringere Dichte aufweisen als die flüssigen Bestandteile der Suspension, in einem selbstreinigenden Filter erfolgt.

**7.** Verfahren nach einem der vorstehenden Ansprüche, dadurch gekennzeichnet, daß die Suspension vor dem Aufheizen in einem selbstreinigenden Filter gefiltert wird, welches ein Gehäuse mit einem Einlaß für die Suspension und einem Auslaß für die Sedimente aufweist und bei dem eine Filterfläche zusammen mit der Innenwand des Gehäuses eine Kammer für das Filtrat begrenzt, die einen Auslaß für das Filtrat aufweist, und bei dem Mittel zum Wiederfreimachen der Filterfläche nach Zusetzen derselben vorhanden sind.

**8.** Verfahren nach einem der vorhergehenden Ansprüche, bei welchem die im wesentlichen wässrige Phase und/oder das aus den Sedimenten herausgedrückte Wasser in den Kreislauf zurückgespeist werden und zwar stromauf des selbstreinigenden Filters und/oder beim Verfahrensschritt des Aufheizens der Suspension und/oder zwischen dem Schritt der Filtration im selbstreinigenden Filter und dem Schritt des Aufheizens und/oder zwischen dem Schritt des Aufheizens und dem Schritt der Zerlegung durch Zentrifugieren.

**9.** Verfahren nach einem der vorhergehenden Ansprüche, dadurch gekennzeichnet, daß das Wasser durch Pressen aus den Sedimenten herausgedrückt wird, während deren Temperatur zwischen 50° und 70° C liegt.

**10.** Vorrichtung zur Durchführung des Verfahrens nach einem der vorhergehenden Ansprüche, mit einer Trennzentrifuge (25) und einem stromauf der Trennzentrifuge (25) angeordneten selbstreinigenden Filter (19), welches seinerseits aufweist:
ein Gehäuse (31) mit einem Einlaß (34) für die Suspension und einem Auslaß (33) für die Sedimente, eine Filterfläche (35) , die mit der Innenwand des Gehäuses (31) eine Kammer (36) für das Filtrat begrenzt, die mit einem Filtrat-Auslaß (37) versehen ist, und Mittel (40) zum Wiederfreimachen der Filterfläche (35) nach einem Zusetzen, und mit einem Heizer (23), der zwischen das selbstreinigende Filter und die Trennzentrifuge (25) eingefügt ist, gekennzeichnet durch eine Leitung (50), durch welche der Sediment-Auslaß der Trennzentrifuge (25) mit einem Filter (51) verbunden wird, welches eine Maschenweite zwischen 0,2 und 0,5 mm aufweist und beim Filtern so´arbeitet, daß es auf das zu filtrierende Produkt einen Druck ausübt.

**11.** Vorrichtung nach Anspruch 10, dadurch gekennzeichnet, daß das stromab der Trennzentrifuge (25) liegende Filter (51) ein Preßfilter oder ein Bandfilter ist.

**12.** Vorrichtung nach Anspruch 10 oder 11, gekennzeichnet durch Leitungen, welche Verbindungen herstellen zwischen der Auslaßleitung (47) der Trennzentrifuge (25), welche die im wesentlichen wässrige Phase führt, und/oder der Auslaßleitung (56) des stromab der Trennzentrifuge (25) angeordneten Filters (51), welche Wasser führt, mit einem Punkt, der stromauf des selbstreinigenden Filters (19) liegt und/oder mit dem Heizer (15) und/oder mit einem Punkt, der zwischen dem Heizer (15) und der Trennzentrifuge (25) liegt.

FIG_1

FIG_2

FIG_3

FIG_4